# EUROPÄISCHE PATENTANMELDUNG

(11) **EP 0 661 898 A2**
(43) Veröffentlichungstag der Anmeldung: **05.07.1995**
(21) Anmeldenummer: 94119153.8
(22) Anmeldetag: 05.12.1994
(51) Int. Cl.: H04Q 11/04, H04L 12/56

(54) **Verfahren und Einrichtung zur zufälligen Auswahl einer von N gleichen Einheiten, sowie Koppelelement, Koppelnetz und Vermittlungsstelle damit**

(30) Priorität: 21.12.1993 DE 4343588
(71) Anmelder: Alcatel SEL Aktiengesellschaft, D-70435 Stuttgart (DE)
(72) Erfinder: Willmann, Gert, D-70184 Stuttgart (DE); Wippenbeck, Matthias, D-70193 Stuttgart (DE)
(74) Vertreter: Brose, Gerhard

(57) **Zusammenfassung**

**Stand der Technik:** Statistisches Verteilen eines Verkehrsstroms auf mehrere Verkehrsströme.

**Technisches Problem:** Realisierung der statistischen Verteilung.

**Grundgedanke:** Zyklisches Verschieben und Vertauschen von Elementen einer Zuordnungsliste mit mindestens einer Zufallsoperation.

**Lösung:** Koppelelement, das ankommende Zellen aufgrund der periodischen Abarbeitung einer Zuordnungsliste, die nach jedem Durchgang durch Verschieben und durch zufälliges Vertauschen von zwei Listenelementen verändert wird, auf mehrere Ausgänge verteilt.

**Vorteile:**
- Einfacher Algorithmus, für HW geeignet.
- Alle möglichen Permutationen werden erzeugt.
- Minimal- und Maximalabstände einstellbar.
- Lösung auch für Problemstellungen in anderen Bereichen verwendbar.

## Beschreibung

Die Erfindung betrifft ein Verfahren und eine Einrichtung zur zufälligen Auswahl einer von N gleichen Einheiten, ein Koppelelement nach dem Oberbegriff von Anspruch 12, ein Koppelnetz nach dem Oberbegriff von Anspruch 13 und eine Vermittlungsstelle nach dem Oberbegriff von Anspruch 14.

Bei Koppelnetzen tritt des öfteren der Fall auf, daß einige interne Verbindungswege besonders stark ausgelastet sind, wohingegen andere interne Verbindungswege nur schwach belastet sind. Dieser Effekt ergibt sich durch ungleichmäßige Verkehrsbelastung der Eingänge des Koppelnetzes, durch die Verkehrscharakteristik, oder durch Korrelationen des ankommenden Verkehrs. Eine Möglichkeit, diesen Effekt zu bekämpfen, ist, den ankommenden Verkehr zuerst zu mischen und so möglichst gleichmäßig über das Koppelnetz zu verteilen.

Die Erfindung geht nun von einer Lösung für dieses Problem aus, wie sie in dem Artikel "Das ATM-Koppelfeld von Alcatel und seine Eigenschaften" von D. Böttle und M.A. Henrion, Elektrisches Nachrichtenwesen, Band 64, Nummer 2/3, 1990, auf den Seiten 156 bis 165 beschrieben ist.

Dort wird ein ATM-Koppelnetz (ATM = Aynchronous Transfer Mode) beschrieben, das aus mehreren Koppelnetzstufen besteht, die ihrerseits aus mehreren Koppelelementen aufgebaut sind. Die ersten Koppelnetzstufen stellen Verteilstufen dar. Die Koppelelemente dieser Stufen verteilen die ankommenden Zellen über alle ihre Ausgänge. In den folgenden Koppelnetzstufen findet dann die eigentliche Wegesuche statt. Auch hier sind Mehrfachwege möglich. Für das gesamte Koppelnetz werden selbststeuernde Mehrwege-Koppelelemente verwendet, die abhängig von ihrer Stufennummer eine spezielle Art der Wegesuche vornehmen. Dabei ist es möglich, daß die an den Eingängen eines solchen Koppelelements ankommenden Zellen auf eine Gruppe von Mehrfachleitungen zufällig verteilt werden.

Wie diese zufällige Verteilung von Zellen auf eine Gruppe von Leitungen zu geschehen hat, wird dort nicht weiter ausgeführt.

In dem Artikel "Design of a Broadcast Packet Network" von J. S. Turner, IEE Infocom Conf., 1986, S. 667-675, wird ebenfalls ein Koppelnetz mit Verkehrsmischung beschrieben.

Das Koppelnetz besteht aus einem Verteilnetz und einem nachgeschalteten Wegesuchnetz. Die Koppelelemente des Verteilnetzes besitzen zwei Ein- und zwei Ausgänge. Sie leiten ein ankommendes Datenpaket abwechselnd an den einen und den anderen Ausgang weiter. Falls ein Ausgang oder beide Ausgänge belegt sind, wird als nächstes der Ausgang verwendet, der zuerst frei wird.

Dieses Verfahren, ankommende Datenpakete auf zwei Ausgangsleitungen zu verteilen, hat den Nachteil, daß der verwendete Algorithmus deterministisch ist. Dadurch können neue Korrelationen entstehen und die Verteilung der Datenpakete ist so aus Verkehrssicht nicht optimal.

Das Problem, Datenpakete auf mehrere Ausgangsleitungen zu verteilen entspricht dem Problem, eine Einheit aus einer Anzahl gleicher Einheiten auszuwählen. Es hat sich gezeigt, daß dieses Problem auch auf vielen anderen technischen Gebieten entsteht, z. B. bei der Aufteilung von Prozessen auf eine Anzahl freier Prozessoren in einem Mehrprozessorsystem. Auch die vorliegend gefundene Lösung ist dort anwendbar. Beschrieben wird die vorliegende Erfindung jedoch an vermittlungstechnischen Beispielen.

Ein Mathematiker würde dieses Problem durch die Berechnung von pseudozufälligen Permutationen lösen. Die dafür notwendigen Algorithmen sind jedoch recht komplex und eignen sich deshalb nicht für eine Hardware-Realisierung, wie sie z. B. für schnelle Koppelnetze notwendig ist.

Der Erfindung liegt nun die Aufgabe zugrunde, eine von mehreren gleichen Einheiten zufällig auszuwählen.

Die Aufgabe wird gelöst durch ein Verfahren und eine Einrichtung nach der Lehre von Anspruch 1 bzw. Anspruch 8. Vorteilhafte Anwendungen sind den Ansprüchen 12, 13 und 14 zu entnehmen.

Es ist der Grundgedanke der Erfindung, eine Zuordnungsliste durch zyklisches Verschieben und durch Vertauschen zu verändern, wobei mindestens eine dieser Operationen vom Zufall gesteuert wird. Durch dieses Vorgehen wird eine zufällige Permutation der Elemente der ursprünglichen Zuordnungsliste erzeugt.

Die Zuordnungsliste wird periodisch abgearbeitet. Jedes Element der Zuordnungsliste verweist dabei auf eine Einheit von einer Anzahl gleicher Einheiten. Solche Einheiten können z. B. die Ein- oder Ausgänge von Koppelelementen oder freie Prozessoren in einem Mehrprozessorsystem sein.

Vorteilhafte Ausgestaltungen der Erfindung sind den Unteransprüchen zu entnehmen.

Die Erfindung hat den Vorteil, daß alle möglichen Permutationen einer Zuordnungsliste zufällig erzeugt werden. Dadurch eignet sie sich in besonderer Weise für die Vermischung von Verkehrsströmen.

Ein weiterer Vorteil ist, daß eine erfindungsgemäße Einrichtung für eine Hardware-Implementierung geignet ist, wie sie zum Beispiel für schnelle Koppelnetze gefordert ist.

Desweiteren ist es durch geschickte Wahl der Parameter möglich, Minimal- und Maximalabstände für die aufeinanderfolgende Auswahl einer Einheit festzulegen. Dies ist vor allem für Koppelelemente wichtig, bei denen Zeitbedingungen bei der aufeinanderfolgenden Belegung von Eingängen oder Ausgängen bestehen.

Im folgenden wird die Erfindung anhand zweier Ausführungsbeispiele und eines Anwendungsbeispiels unter Zuhilfenahme der bei liegenden Zeichnungen weiter erläutert.
- Fig. 1: zeigt ein Blockschaltbild eines Verkehrsmischers als beispielhafte Ausführung einer erfindungsgemäßen Einrichtung für ein erstes und ein zweites Ausführungsbeispiel.
- Fig. 2: zeigt ein Ablaufdiagramm zum Verändern einer Liste für das erste Ausführungsbeispiel.
- Fig. 3: zeigt ein Ablaufdiagramm zum Verändern einer Liste für das zweite Ausführungsbeispiel.

In dem ersten Ausführungsbeispiel wird die Anwendung des erfindungsgemäßen Verfahrens und die Verwendung der erfindungsgemäßen Einrichtung in einem Verkehrsmischer erläutert.

Eine erfindungsgemäße Einrichtung kann aber auch für eine Vielzahl anderer Aufgaben verwendet werden. Einige Beispiele hierfür sind: Auswahl eines von mehreren Kanälen, Empfängern, Sendern, weiterverarbeitenden Einheiten, Speicherplätzen, oder Koppelelementen.

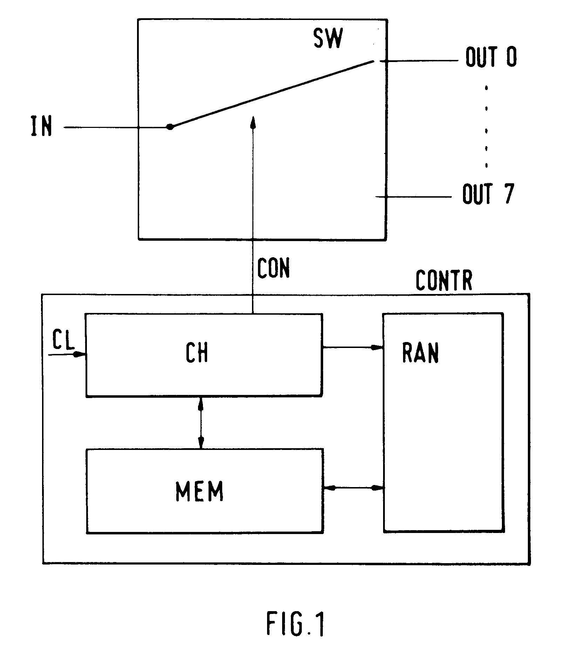

Fig. 1 zeigt eine Schalteinrichtung SW und eine Steuereinrichtung CONTR. Die Schalteinrichtung SW erhält ein Steuersignal CON von der Steuereinrichtung CONTR.

Die Schalteinrichtung SW hat 8 Ausgänge OUT0 bis OUT7 und einen Eingang IN. Der an dem Eingang IN anliegende Verkehrsstrom, der sich z. B. aus Datenpaketen oder Daten-Zellen zusammensetzt, wird von der Schalteinrichtung SW auf die Ausgänge OUT1 bis OUT7 aufgeteilt. Die Schalteinrichtung SW wählt dazu jeweils für ein bestimmtes Zeitintervall, z.B. die Dauer einer Daten-Zelle, einen der Ausgänge OUT0 bis OUT7 aus und leitet den Verkehrsstrom vom Eingang IN an den ausgewählten Ausgang weiter. Diese Auswahl erfolgt dabei aufgrund des Steuersignals CON, das von der Steuereinrichtung CONTR stammt.

Es ist auch möglich, daß die Ausgänge OUT1 bis OUT7 oder der Eingang IN Warteschlangen für Datenpakete oder Daten-Zellen sind. Die Schalteinrichtung SW würde so z.B. jeweils eine der Ausgangswarteschlangen auswählen und in diese ein Datenpaket oder eine Daten-Zelle von der Eingangswarteschlange einschreiben.

Es ist auch möglich, daß die Schalteinrichtung SW anstelle von einem Eingang und acht Ausgängen über acht Eingänge und einen Ausgang verfügt. Die Schalteinrichtung SW würde so die an den Eingängen anliegenden Verkehrströme auf einen Verkehrsstrom vereinigen. Es wäre auch hier analog zu oben möglich, daß die Eingänge oder der Ausgang Warteschlangen sind.

Die Steuereinrichtung CONTR weist eine Wahleinrichtung CH, eine Speichereinrichtung MEM und einen Verwürfler RAN auf.

Die Wahleinrichtung CH liefert das Steuersignal CON, empfängt ein Taktsignal CL und tauscht Daten mit der Speichereinrichtung MEM aus. Der Verwürfler RAN tauscht Daten mit der Speichereinrichtung MEM aus und empfängt Daten von der Wahleinrichtung CH.

In der Speichereinrichtung MEM ist eine Liste von acht Zuordnungselementen abgelegt. Jedes dieser Zuordnungselemente hat eine bestimmte Position in dieser Liste und verweist auf einen der Ausgänge OUT0 bis OUT7. Dabei verweist jeweils nur ein Zuordnungselement auf einen der Ausgänge OUT0 bis OUT7.

Es ist auch möglich, daß die Liste in der Speichereinrichtung MEM mehr als acht Zurordnungselemente enthält und zwei oder mehr Zuordnungselemente auf einen der Ausgänge OUT0 bis OUT7 verweisen. Dies kann für den Fall sinnvoll sein, daß verschiedene Ausgänge mit unterschiedlicher Häufigkeit ausgewählt werden sollen.

Den Ausgängen OUT0 bis OUT7 sind Kennzahlen 0 bis 7 zugewiesen. Ein Zuordnungselement besteht so aus der Kennzahl des entsprechenden Ausgangs, auf den es verweist. Es ist auch möglich, andere Daten, die einen der Ausgänge OUT0 bis OUT7 kennzeichnen, als Zuordungselement zu verwenden.

Die Speichereinrichtung MEM besteht z.B. aus einem RAM (= Random Access Memory) mit acht Speicherplätzen für jeweils eine Kennzahl.

Das Taktsignal CL kommt von einem internen Taktgenerator der Steuereinrichtung CONTR. Es bestimmt den Takt, in dem die Steuereinrichtung CONTR jeweils einen neuen Ausgang auswählt. Es ist auch möglich, daß das Taktsignal C6 von einem externen Taktgenerator erzeugt wird. Dies ist vor allem dann sinnvoll, wenn dieser Taktgenerator z. B. die Ankunft von Datenpaketen an dem Eingang IN beeinflußt.

Die Wahleinrichtung CH liest entsprechend dem Takt, den es dem Taktsignal CL entnimmt, Zuordnungselemente aus der Speichereinrichtung MEM aus. Hierbei liest sie in einem Zuordnungs-Durchgang periodisch die Zuordnungselemente in der Reihenfolge aus, in der sie in der Liste in der Speichereinrichtung MEM abgelegt sind. Ist sie beim letzten Zurodnungselement angekommen, unterrichtet sie den Verwürfler RAN davon. Anschließend beginnt sie wiederum mit dem Auslesen des ersten Zuordnungselementes und beginnt so einen neuen Zuordnungs-Durchgang.

Es ist auch möglich, daß die Wahleinrichtung CH die Zuordnungselemente in einer anderen Reihenfolge als in der Liste vermerkt aus der Speichereinrichtung MEM ausliest.

Der Verwürfler RAN verändert die Position, in der die Zuordnungselemente abgelegt sind, zwischen zwei Zuordnungs-Durchgängen durch eine zyklische Verschiebe- und eine zufällige Vertauschoperation. Das Ende jedes Zuordnungs-Durchganges wird ihm hierfür durch eine entsprechende Nachricht von der Wähleinrichtung CH angezeigt. Bevor die Wähleinrichtung CH einen neuen Zuordnungs-Durchgang beginnt, hat der Verwürfler RAN seine Tätigkeit bereits beendet.

Es ist auch möglich, daß in der Speichereinrichtung MEM zwei oder mehr Listen abgelegt sind, die parallel verwendet werden. Diese Listen würden dabei abwechselnd von der Wahleinrichtung CH und von dem Verwürfler RAN bearbeitet, so daß beispielsweise bei zwei Listen gleichzeitig Zuordnungselemente aus der einen Liste ausgelesen und die Zuordnungselemente in der anderen Liste verwürfelt würden. Dadurch ist eine noch schnellere Ausführung des erfindungsgemäßen Verfahrens möglich.

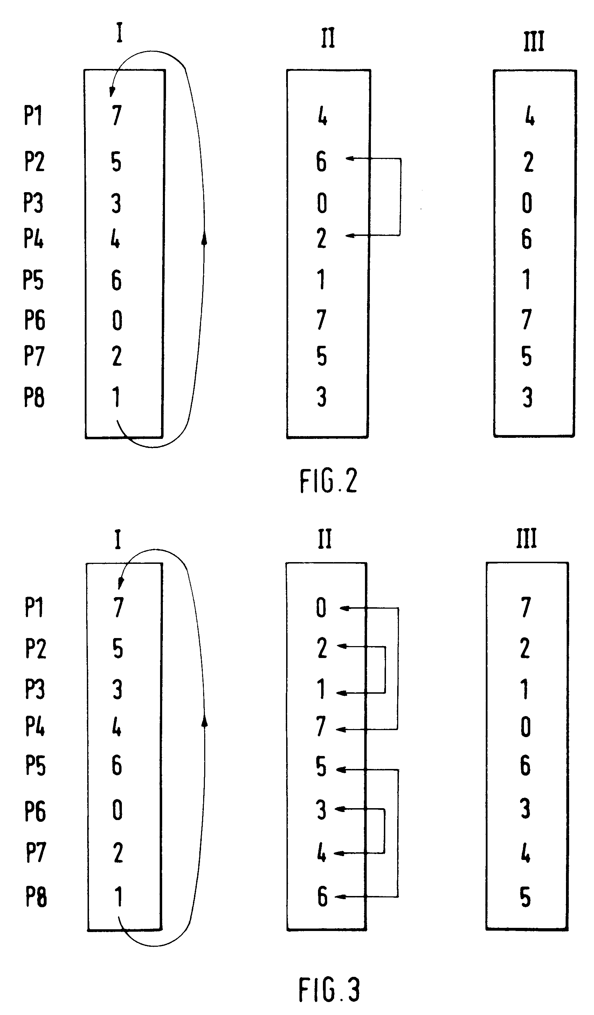

Die genaue Vorgehensweise des Verwürflers RAN bei der Veränderung der Position der Zuordnungselemente wird nun anhand von Fig. 2 näher erläutert.

Fig. 2 zeigt die Belegung einer Liste mit acht Positionen P1 bis P8 in der Speichereinrichtung MEM zu den Zeitpunkten I, II und III. Die Kennzahlen, mit denen die Positionen P1 bis P8 zu den Zeitpunkten I, II und III belegt sind, sind dabei jeweils entsprechend ihrer Position vermerkt.

Zum Zeitpunkt I sind die Positionen P1 bis P8 mit den Kennzahlen 7, 5, 3, 4, 6, 0, 2 bzw. 1 belegt. Als ersten Schritt führt nun der Verwürfler RAN eine zyklische Verschiebeoperation um 5 Stellen durch. Auch eine zyklische Verschiebung um eine andere Anzahl von Positionen ist möglich. Es ist auch durchaus möglich, daß die zyklische Verschiebeoperation die Zuordnungselemente in einer anderen Reihenfolge als der, in der sie in der Speichereinrichtung MEM abgelegt sind, zyklisch verschiebt.

Für die Verschiebeoperation ist der Verwürfler RAN z.B. mit einem Modulo-8-Addierer ausgestattet. Die Wahleinrichtung CH ist mit einem Zeiger ausgestattet, der für die Abarbeitung der Liste die Position des ersten Zuordnungselementes in der Liste beschreibt. Mittels des Modulo-8-Addierers wird nun zum Wert dieses Zeigers mit einer Modulo-8-Addition (das Ergebnis liegt im Bereich von 0 bis 7; Überträge werden weggestrichen) drei addiert und als neuer Zeiger-Wert abgelegt. Eine zweite Möglichkeit ist, daß der Verwürfler mit einem Zwischenspeicher ausgestattet ist, in den die Zuordnungselemente aus der Speichereinrichtung MEM nacheinander eingeschrieben werden, um sodann in veränderter Reihenfolge wieder in die Speichereinrichtung MEM eingeschrieben zu werden.

Nach der Verschiebeoperation, zum Zeitpunkt II, ist dann die Liste in der Speichereinrichtung MEM mit den Kennzahlen 4, 6, 0, 2, 1, 7, 5 und 3 belegt. Als zweiten Schritt führt der Verwürfler RAN eine Vertauschoperation durch. Er vertauscht die Kennzahlen auf den Positionen 2 und 4 zufällig in dem Sinn, daß die Positionen der zu vertauschenden Kennzahlen festgelegt sind und das Stattfinden oder Nichtstattfinden der Vertauschung vom Zufall abhängt.

Für diese zufällige Vertauschoperation ist der Verwürfler RAN mit einem Zufalls-Generator ausgestattet. Ein solcher Generator kann z.B., wie allgemein bekannt, aus einem mehrfach rückgekoppelten Schieberegister aufgebaut werden. Der Generator stellt ein Bit zur Verfügung, das zufällig '1' oder '0' ist und eine Vertauschungs-Schaltung ansteuert. Eine solche Vertauschungs-Schaltung kann von einem Schaltwerk gebildet werden, das beim Anliegen einer '1' zwei Kennzahlen vertauscht. Für das Vertauschen legt es eine erste vorbestimmte Adresse, die der Position einer ersten Kennzahl entspricht, an den Adresseingang des RAMs an, das die Speichereinrichtung MEM bildet, liest die Kennzahl aus und speichert sie zwischen. Derselbe Vorgang wird für eine zweite Kennzahl wiederholt, deren Position durch eine zweite vorbestimmte Adresse bestimmt ist. Die beiden zwischengespeicherten Kennzahlen werden sodann vertauscht in das RAM eingeschrieben, wobei für die erste Kennzahl die zweite Adresse und für die zweite Kennzahl die erste Adresse an den Adresseingang des RAM's angelegt werden.

Wenn die Vertauschung stattfindet, so ist die Liste in der Speichereinrichtung MEM zum Zeitpunkt III, also nach der zufälligen Vertauschoperation, mit den Kennzahlen 4, 2, 0, 6, 1, 7, 5 und 3 belegt.

Durch diese Funktionsweise des Verwürflers RAN ergibt sich der Vorteil, daß eine Untergrenze für die Anzahl der Taktperioden des Taktsignals CL, die zwischen der aufeinanderfolgenden Auswahl eines Einganges vergehen, festlegbar ist. So ergibt sich hier eine Untergrenze von 3 Taktperioden. Dieser Grenzwert berechnet sich wie folgt: Zyklische Verschiebung um 5 Positionen minus Vertauschung von Kennzahlen, die zwei Positionen voneinander entfernt sind. Dies ergibt eine Untergrenze von 3 Positionen.

Als absolute Obergrenze für die Anzahl der Taktperioden, die zwischen der aufeinanderfolgenden Auswahl eines Eingangs vergehen, ergibt sich zwei mal die Anzahl der Eingänge minus 1, also 15.

In einem zweiten Ausführungsbeispiel wird ebenfalls die Anwendung des erfindungsgemäßen Verfahrens und die Verwendung einer erfindungsgemäßen Vorrichtung in einem Verkehrsmischer erläutert.

Der Verkehrsmischer ist wie der Verkehrsmischer nach Fig. 1 aufgebaut. Nur die Funktionsweise des Verwürflers unterscheidet sich von der Funktionsweise des Verwürflers RAN nach Fig. 1.

Die genaue Funktionsweise des Verwürflers wird nun anhand von Fig. 3 näher verdeutlicht.

Fig. 3 zeigt die Belegung der Positionen P1 bis P8 der Liste in der Speichereinrichtung MEM zu den Zeitpunkten I, II und III. Die Kennzahlen, mit denen die Positionen P1 bis P8 belegt sind, sind jeweils entsprechend ihrer Position vermerkt.

Zum Zeitpunkt I hat die Wähleinrichtung CH gerade einen Zuordnungs-Durchgang beendet und der Verwürfler beginnt, die Liste in der Speichereinrichtung MEM durch eine zufällige zyklische Verschiebeoperation zu verändern. Zum Zeitpunkt II hat der Verwürfler die zufällige Verschiebeoperation beendet und die Wähleinrichtung CH startet einen neuen Zuordnungs-Durchgang. Nach Beendigung dieses Zuordnungs-Durchgangs verändert der Verwürfler die Liste durch eine zufällige Vertauschoperation. Zum Zeitpunkt III ist die zufällige Vertauschoperation beendet und die Wähleinrichtung CH startet erneut einen Zuordnungs-Durchgang. Zwischen zwei Zuordnungs-Durchgängen erfolgt so jeweils abwechselnd eine zyklische Verschiebeoperation oder eine Vertauschoperation.

Zum Zeitpunkt I sind die Positionen P1 bis P8 der Liste mit den Kennzahlen 7, 5, 3, 4, 6, 0, 2 bzw. 1 belegt. Der Verwürfler führt nun eine zufällige zyklische Verschiebeoperation durch. Abhängig von einer Zufallsgröße verschiebt er die Liste zyklisch um 3, 4 oder 5 Positionen, hier um 3 Positionen.

Es ist auch möglich, zufällig um eine andere Anzahl von Positionen zyklisch zu verschieben.

Nach der zyklischen Verschiebung, zum Zeitpunkt II, ist die Liste mit den Kennzahlen 0, 2, 1, 7, 5, 3, 4 und 6 belegt. Die Liste wird nun nach dem nächsten Zuordnungs-Durchgang durch vier zufällige Vertauschoperationen verändert.

Dabei sind die Positionen, die vertauscht werden sollen, breits vorher festgelegt. Die Positionen P1/P4, P2/P3, P5/P8 und P6/P7 sind Paare für eine mögliche paarweise Vertauschung. Das Stattfinden oder das Nichtstattfinden der Vertauschung hängt bei jedem dieser Paare vom Zufall ab. Es werden so z. B. vier unabhängige Zufalls-Generatoren benötigt, die jeweils eine Vertauschungs-Schaltung ansteuern. In diesem Beispiel findet eine Vertauschung bei den Paaren P1/P4 und P6/P8 statt. So ist die Liste zum Zeitpunkt III dann mit den Kennzahlen 7, 2, 1, 0, 6, 3, 4 und 5 belegt.

Es ist auch möglich, eine andere Anzahl von Positionen oder nach einem anderen Schema paarweise zu vertauschen. Es kann auch darauf verzichtet werden, die Positionen, die vertauscht werden können, vorher festzulegen. Die Auswahl der zu vertauschenden Positionen könnte z.B. zufällig erfolgen. Mehrere Positionen können auch nach einem anderen Schema als der paarweisen Vertauschung vertauscht werden.

Der Verwürfler nach dem ersten Ausführungsbeispiel arbeitet mit zufälligen Vertauschoperationen und der Verwürfler nach dem zweiten Ausführungsbeispiel mit zufälligen Verschiebeoperationen und zufälligen Vertauschoperationen. Es ist aber auch ein Verwürfler denkbar, der nur mit zufälligen Verschiebeoperationen und ansonsten mit deterministischen Vertauschoperationen arbeitet.

In dem Anwendungsbeispiel wird nun die Verwendung von erfindungsgemäßen Einrichtungen in einer Vermittlungsstelle erläutert.

Z.B. wird von Koppelelementen des öfteren gefordert, Datenpakete oder Daten-Zellen von Eingangsleitungen auf eine Gruppe von mehreren Ausgangsleitungen zu verteilen. Eine solche Gruppe kann alle Ausgangsleitungen oder eine Teilmenge der Ausgangsleitungen umfassen. Für diese Verteilung wird nun eine oder mehrere erfindungsgemäße Einrichtungen eingesetzt. Für die Stelle, an der diese Einrichtungen eingesetzt werden, gibt es mehrere Möglichkeiten.

Die an den Eingängen des Koppelelements ankommenden Verkehrsströme können mit einem Verkehrsmischer, wie nach Fig. 1 beschrieben, zu einem Verkehrsstrom vereinigt werden, der dann auf die Ausgänge des Koppelelements aufgeteilt wird.

Die an den Eingängen ankommenden Verkehrsströme können auf einen Verkehrsstrom vereinigt werden und dann mit einem Verkehrsmischer, wie nach Fig. 1 beschrieben, auf die Ausgänge verteilt werden.

Die Datenpakete oder Daten-Zellen der ankommenden Verkehrsströme können Ausgangs-Gruppen zugeteilt werden. Die ankommenden Verkehrsströme werden auf mehrere Gruppen-Verkehrsströme vereinigt, die dann durch eine oder durch mehrere Verkehrsmischer, wie nach Fig. 1 beschrieben, auf die Ausgänge des Koppelelements verteilt werden.

Ein Koppelnetz einer Vermittlungsstelle besteht aus mehreren Koppelnetzstufen. Es ist vorteilhaft, die erste Hälfte der Koppelnetzstufen als Verteilstufen auszugestalten, die den am Koppelnetz ankommenden Verkehr über die Eingänge der folgenden Koppelnetzstufen verteilen. Eine solche Verteilstufe wird nun aus einem Verkehrsmischer, wie nach Fig. 1 beschrieben, oder aus mehreren solchen Verkehrsmischern aufgebaut, die kaskadiert verschaltet sind. Es ist auch möglich, eine solche Verteilstufe aus mehreren Koppelelementen, wie sie oben beschrieben sind, aufzubauen.

## Patentansprüche

1. Verfahren zur zufälligen Auswahl einer von N gleichen Einheiten (OUT0 bis OUT7), **dadurch gekennzeichnet,** daß eine Liste, die mindestens N Zuordnungselemente enthält, die jeweils auf eine der N gleichen Einheiten (OUT0 bis OUT7) verweisen, periodisch in Zuordnungs-Durchgängen abgearbeitet wird, daß die Liste durch zyklische Verschiebeoperationen und Vertauschoperationen verändert wird, wobei mindestens eine dieser Operationen vom Zufall gesteuert wird, und daß zwischen Zuordnungs-Durchgängen, Verschiebeoperationen und Vertauschoperationen abgewechselt wird.

2. Verfahren nach Anspruch 1, dadurch gekennzeichnet, daß zwischen zwei Zuordnungs-Durchgängen jeweils eine zyklische Verschiebeoperation und eine Vertauschoperation erfolgt, wobei eine dieser beiden Operationen vom Zufall gesteuert wird.

3. Verfahren nach Anspruch 1, dadurch gekennzeichnet, daß zwischen zwei Zuordnungs-Durchgängen jeweils abwechselnd eine zyklische Verschiebeoperation und eine Vertauschoperation erfolgt.

4. Verfahren nach Anspruch 1, dadurch gekennzeichnet, daß bei den zyklischen Verschiebeoperationen die Zuordnungselemente in der Liste um M Plätze zyklisch verschoben werden.

5. Verfahren nach Anspruch 1, dadurch gekennzeichnet, daß bei den Vertauschoperationen diejenigen Plätze in der Liste, die vertauscht werden sollen, vorbestimmt sind und das Stattfinden oder Nichtstattfinden der Vertauschung vom Zufall abhängt.

6. Verfahren nach Anspruch 5, dadurch gekennzeichnet, daß es sich bei der Vertauschung um eine paarweise Vertauschung von zwei Zuordnungselementen handelt.

7. Verfahren nach Anspruch 1, dadurch gekennzeichnet, daß bei den zyklischen Verschiebeoperationen die Zuordnungselemente in der Liste um eine zufällige Anzahl von Plätzen zyklisch verschoben werden.

8. Einrichtung zur zufälligen Auswahl einer von N gleichen Einheiten (OUT0 bis OUT7), **dadurch gekennzeichnet,** daß die Einrichtung mit einer Speichereinrichtung (MEM), mit einem Verwürfler (RAN) und mit einer Wahleinrichtung (CH) versehen ist, daß in der Speichereinrichtung MEM eine Liste mit mindestens N Zuordnungselementen abgespeichert ist, die jeweils auf eine der N gleichen Einheiten (OUT0 bis OUT7) verweisen, daß der Verwürfler (RAN) so ausgestaltet ist, daß er die Position (P1 bis P8) der Zuordnungselemente in der Speichereinrichtung (MEM) durch zyklische Verschiebeoperationen und durch Vertauschoperationen verändert, wobei mindestens eine dieser Operationen vom Zufall gesteuert ist, und daß die Wahleinrichtung (CH) so ausgestaltet ist, daß sie die Liste in der Speichereinrichtung (MEM) periodisch in einem Zuordnungs-Durchgang abarbeitet und so jeweils diejenige Einheit (OUT0 bis OUT7) auswählt, auf die das aktuelle Zuordnungselement verweist.

9. Einrichtung nach Anspruch 8, dadurch gekennzeichnet, daß die N gleichen Einheiten ein Bündel von N Leitungen sind, auf denen Datenpakete ankommen.

10. Einrichtung nach Anspruch 8, dadurch gekennzeichnet, daß die N gleichen Einheiten (OUT0 bis OUT7) ein Bündel von N Leitungen sind, auf die Datenpakete verteilt werden.

11. Einrichtung nach Anspruch 8, dadurch gekennzeichnet, daß die N gleichen Einheiten N Prozessoren sind, auf die Prozesse verteilt werden.

12. Koppelelement mit einer Einrichtung zur zufälligen Auswahl einer von N gleichen Einheiten (OUT0 bis OUT7), **dadurch gekennzeichnet,** daß das Koppelelement mit einer Speichereinrichtung (MEM), mit einem Verwürfler (RAN) und mit einer Wahleinrichtung (CH) versehen ist, daß in der Speichereinrichtung (MEM) eine Liste mit mindestens N Zuordnungselementen abgespeichert ist, die jeweils auf eine der N gleichen Einheiten (OUT0 bis OUT7) verweisen, daß der Verwürfler (RAN) so ausgestaltet ist, daß er die Position der Zuordnungselemente in der Speichereinrichtung (MEM) durch zyklische Verschiebeoperationen und durch Vertauschoperationen verändert, wobei mindestens eine dieser Operationen vom Zufall gesteuert ist, und daß die Wahleinrichtung (CH) so ausgestaltet ist, daß sie die Liste in der Speichereinrichtung periodisch in einem Zuordnungs-Durchgang abarbeitet und jeweils diejenige Einheit (OUT0 bis OUT7) auswählt, auf die das aktuelle Zuordnungselement verweist.

13. Koppelnetz mit mehreren Koppelnetzstufen, von denen mindestens eine eine Verteilstufe ist, die mit mindestens einer Einrichtung zur zufälligen Auswahl einer von N gleichen Einheiten (OUT0 bis OUT7) versehen ist, **dadurch gekennzeichnet,** daß die Einrichtung mit einer Speichereinrichtung (MEM), mit einem Verwürfler (RAN) und mit einer Wahleinrichtung (CH) versehen ist, daß in der Speichereinrichtung (MEM) eine Liste von mindestens N Zuordnungselementen abgespeichert ist, die jeweils auf eine der N gleichen Einheiten (OUT0 bis OUT7) verweisen, daß der Verwürfler (RAN) so ausgestaltet ist, daß er die Position der Zuordnungselemente in der Speichereinrichtung (MEM) durch zyklische Verschiebeoperationen und durch Vertauschoperationen verändert, wobei mindestens eine dieser Operationen vom Zufall gesteuert ist, und daß die Wahleinrichtung (RAN) so ausgestaltet ist, daß sie die Liste in der Speichereinrichtung (MEM) periodisch in einem Zuordnungs-Durchgang abarbeitet und jeweils diejenige Einheit (OUT0 bis OUT7) auswählt, auf die das aktuelle Zuordnungselement verweist.

14. Vermittlungsstelle mit mindestens einer Einrichtung zur zufälligen Auswahl einer von N gleichen Einheiten (OUT0 bis OUT7), **dadurch gekennzeichnet,** daß die Einrichtung mit einer Speichereinrichtung (MEM), mit einem Verwürfler (RAN) und mit einer Wahleinrichtung (CH) versehen ist, daß in der Speichereinrichtung (MEM) eine Liste von mindestens N Zuordnungselementen abgespeichert ist, die jeweils auf eine der N gleichen Einheiten (OUT0 bis OUT7) verweisen, daß der Verwürfler (RAN) so ausgestaltet ist, daß er die Position der Zuordnungselemente in der Speichereinrichtung (MEM) durch zyklische Verschiebeoperationen und durch Vertauschoperationen verändert, wobei mindestens eine dieser Operationen vom Zufall gesteuert ist, und daß die Wahleinrichtung (CH) so ausgestaltet ist, daß sie die Liste in der Speichereinrichtung (MEM) periodisch in einem Zuordnungs-Durchgang abarbeitet und jeweils diejenige Einheit (OUT0 bis OUT7) auswählt, auf die das aktuelle Zuordnungselement verweist.
